# EUROPEAN PATENT SPECIFICATION

(11) **EP 4 240 188 B1**
(45) Date of publication and mention of the grant of the patent: **31.12.2025**
(21) Application number: 21805515.0
(22) Date of filing: 05.11.2021
(51) Int. Cl.: A24F 40/40, A24F 40/57, A24F 42/60, H01M 50/342, H01M 50/578, A24F 40/42

(54) **AEROSOL GENERATING DEVICE COMPRISING AN OUTER WALL AND A POWER SUPPLY DEVICE**
AEROSOLERZEUGUNGSVORRICHTUNG MIT EINER AUSSENWAND UND EINER STROMVERSORGUNGSVORRICHTUNG
DISPOSITIF DE GÉNÉRATION D'AÉROSOL COMPRENANT UNE PAROI EXTÉRIEURE ET UN DISPOSITIF D'ALIMENTATION ÉLECTRIQUE

(30) Priority: 06.11.2020 EP 20206190
(43) Date of publication of application: 13.09.2023
(73) Proprietor: JT International S.A., 1202 Genève (CH)
(72) Inventor: ADAIR, Kyle, LISBURN County Antrim BT28 2UW (GB); POPOOLA, Olayiwola Olamiposi, Walton-on-Thames KT12 2SJ (GB); LOVEDAY, Peter, Epsom Surrey KT17 4ND (GB)
(74) Representative: Lavoix
(86) International application number: PCT/EP2021/080708
(87) International publication number: WO 2022/096618

(56) References cited:
- EP-A1- 3 794 991
- WO-A1-2016/008150
- CN-A- 111 109 660
- CN-U- 206 727 144

## Description

### FIELD OF THE INVENTION

The present invention concerns an aerosol generating device comprising an outer wall and a power supply device.

### BACKGROUND OF THE INVENTION

Different types of aerosol generation devices are already known in the art. Generally, such devices comprise a storage portion for storing an aerosol forming precursor, which can comprise for example a liquid or a solid. A heating system is formed of one or more electrically activated resistive heating elements arranged to heat said precursor to generate the aerosol. The aerosol is released into a flow path extending between an inlet and outlet of the device. The outlet may be arranged as a mouthpiece, through which a user inhales for delivery of the aerosol.

In some aerosol generation devices, the precursor is stored in a removable cartridge. Thus, when the precursor is consumed, the cartridge can be easily removed and replaced. In order to attach the removable cartridge to the device body, a screw-threaded connection can for example be used.

Most of the known aerosol generation devices comprises an outer casing containing a power supply device and comprising a receiving cavity for receiving the cartridge. The outer casing is notably a plastic or metallic casing and the power supply comprises a battery cell.

This battery cell may face an undesirable thermal runaway. This battery thermal runaway occurs when a cell, or area within the cell, achieves elevated temperatures due to thermal failure, mechanical failure, internal/external short circuiting, and electrochemical abuse. At elevated temperatures, exothermic decomposition of the cell materials begins. Eventually, the self-heating rate of the cell is greater than the rate at which heat can be dissipated to the surroundings, the cell temperature rises exponentially, and stability is ultimately lost. The loss in stability results in all remaining thermal and electrochemical energy being released to the surroundings. The thermal runaway may also lead to the release of gases in the surroundings of the battery.

The battery cell may also face an undesirable excessive battery cell swelling along the longitudinal axis of the device. This battery swelling may occur for several reasons including high number of charge/discharge cycles, excessive discharge current, excessive voltage applied during charging or battery cell manufacturing issues.

These two issues may lead to an overpressure inside the device and lead to a destruction of the device and an attempt to the user's safety.

CN 111 109 660 describes an aerosol generation device comprising a buffer plug configured to open or close a functional channel. CN 206 727 144 describes an aerosol generation device comprising an emergency venting structure.

### SUMMARY OF THE INVENTION

One of the aims of the present invention is to provide an aerosol generation device comprising a safety measure in case of battery cell thermal runaway or swelling with minimal visual, functional and cost impact.

For this purpose, the invention relates to an aerosol generation device extending along a longitudinal axis and comprising an outside casing delimiting an inside part of the device, the inside part comprising a power supply device and a receiving cavity for receiving a cartridge; the outside casing comprising a frame and an outer wall attached to the frame; the outer wall extending along the longitudinal axis; and the outer wall being configured to rupture and/or at least a portion of the outer wall is configured to bend and/or to be detached from the frame when the pressure inside the device is greater than a predetermined threshold pressure.

Indeed, using these features, the outer wall of the casing is able to rupture and/or bend and/or be detached in a controlled manner in case of an overpressure inside the device and prevents therefore excessive damage on the device and ensure user's safety.

According to some embodiments, the device comprises two extremities along the longitudinal axis, the outer wall being configured to rupture and/or at least a portion of the outer wall is configured to bend and/or to be detached from the frame away from the extremities.

According to some embodiments, the outer wall comprises an outer surface able to be hold by a user of the device.

According to some embodiments, the outer wall comprises a weak area configured to rupture when the pressure inside the device is greater than the predetermined threshold pressure.

Thanks to these features, only the weak area ruptures in case of overpressure and ensures the device integrity and the user's safety.

According to some embodiments, the weak area is a slit arranged on a side of the outer wall facing the inside part of the device.

Thanks to these features, the slit defines a rupture starting point in the outer wall to control the rupture in case of overpressure.

According to some embodiments, the outer wall further comprises an attaching area attaching the outer wall to the frame with first fixing means, the weak area being a contact area different from the attaching area and arranged in contact with the frame without fixing means or with second fixing means weaker than the first fixing means..

Thanks to these features, the area without fixing means or with a weaker fixing means defines a rupture starting point in the outer wall to control the rupture in case of overpressure.

According to some embodiments, the weak area is a thinner region with a reduced thickness compared to the rest of the outer wall.

Thanks to these features, the area with a reduced thickness defines a rupture starting point in the outer wall to control the rupture in case of overpressure.

According to some embodiments, the outer comprises a first portion and a second portion, the first portion being attached to the frame and the second portion is attached to the first portion via fixing means allowing the second portion to bend and/or to be detached from the first portion when the pressure inside the device is greater than the predetermined threshold pressure.

Thanks to these features, the outer wall is able to deflect in case of overpressure to release the pressure.

According to some embodiments, wherein the outer wall is made of glass.

Thanks to these features, the outer wall is able to rupture in a controlled manner, while improving the design and the comfort of the device.

According to some embodiments, the outer wall is made of plastic material, preferably polycarbonate material.

Thanks to these features, the outer wall is able to deflect in a controlled manner, while improving the design and the comfort of the device.

According to some embodiments, further comprising a second outer wall attached to the frame parallel to the longitudinal axis of the device, the second outer wall being configured to rupture and/or to bend and/or to be detached from the frame when the pressure inside the device is greater than the predetermined threshold pressure.

According to some embodiments, the outside casing presents generally a parallelepiped extending along the longitudinal axis, the two outer walls forming at least partially a pair of parallel sides of the parallelepiped.

Thanks to these features, the device is able to rupture or deflect at two different positions enabling to overcome an overpressure at different locations in the device.

According to some embodiments, the or each outer wall is attached to the outside casing using fixing means amongst: bonding, molding, mechanical fixation such as screwing.

According to some embodiments, the frame defines at least an opening delimited by an edge, the or each edge comprising a protruding part retaining the corresponding outer wall in the corresponding opening.

According to some embodiments, wherein the frame is made of materials amongst: aluminum, stainless steel, titanium.

Thanks to these features, it is possible to achieve good fixing properties between the outer wall and the frame in normal conditions and a good protection of the elements disposed inside the device.

### BRIEF DESCRIPTION OF THE DRAWINGS

The invention and its advantages will be better understood upon reading the following description, which is given solely by way of non-limiting example and which is made with reference to the appended drawings, in which:
- Figure 1 is a partially exploded perspective view of an aerosol generation device according to a first embodiment of the invention;
- Figure 2 is a front view of a part of the aerosol generation device of Figure 1,
- Figure 3 is a top view of the aerosol generation device according to a second embodiment of the invention without outer wall;
- Figure 4 is a front view of a part of the aerosol generation device according to a third embodiment of the invention; and
- Figure 5 is a cross-sectional view of a part of the aerosol generation device according to a fourth embodiment of the invention.

### DETAILED DESCRIPTION OF THE INVENTION

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

As used herein, the term **"aerosol generation device" or "device"** may include a vaping device to deliver an aerosol to a user, including an aerosol for vaping, by means of aerosol generating unit (e.g. an aerosol generating element which generates vapor which condenses into an aerosol before delivery to an outlet of the device at, for example, a mouthpiece, for inhalation by a user). The device may be portable. "Portable" may refer to the device being for use when held by a user. The device may be adapted to generate a variable amount of aerosol, e.g. by activating a heater system for a variable amount of time (as opposed to a metered dose of aerosol), which can be controlled by a trigger. The trigger may be user activated, such as a vaping button and/or inhalation sensor. The inhalation sensor may be sensitive to the strength of inhalation as well as the duration of inhalation to enable a variable amount of vapor to be provided (so as to mimic the effect of smoking a conventional combustible smoking article such as a cigarette, cigar or pipe, etc.). The device may include a temperature regulation control to drive the temperature of the heater and/or the heated aerosol generating substance (aerosol pre-cursor) to a specified target temperature and thereafter to maintain the temperature at the target temperature that enables efficient generation of aerosol.

As used herein, the term **"aerosol"** may include a suspension of precursor as one or more of: solid particles; liquid droplets; gas. Said suspension may be in a gas including air. Aerosol herein may generally refer to/include a vapor. Aerosol may include one or more components of the precursor.

As used herein, the term **"aerosol-forming precursor" or "precursor" or "aerosol-forming substance" or "substance" or "vaporizable material"** is used to designate any material that is vaporizable in air to form aerosol. Vaporisation is generally obtained by a temperature increase up to the boiling point of the vaporization material, such as at a temperature up to 400°C, preferably up to 350°C. The vaporizable material may, for example, comprise or consist of an aerosol-generating liquid, gel, or wax or the like or an aerosol -generating solid that may be in the form of a rod, which contains processed tobacco material, a crimped sheet or oriented strips of reconstituted tobacco (RTB), or any combination of these. The vaporizable material may comprise one or more of: nicotine; caffeine or other active components. The active component may be carried with a carrier, which may be a liquid. The carrier may include propylene glycol or glycerin. A flavoring may also be present. The flavoring may include Ethylvanillin (vanilla), menthol, Isoamyl acetate (banana oil) or similar.

### FIRST EMBODIMENT OF THE INVENTION

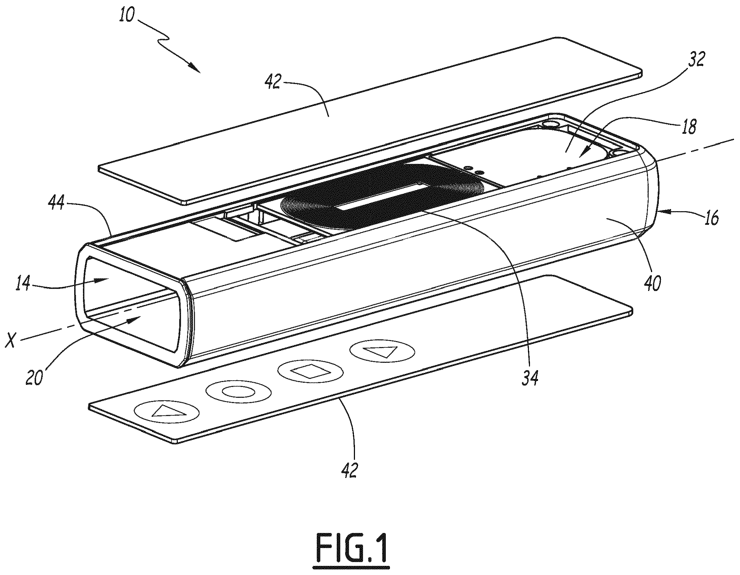

An aerosol generation device 10 according to a first embodiment of the invention is shown on Figure 1. In the example of this Figure 1, the aerosol generation device 10 is designed to operate with a removable cartridge (not showed) which is intended to be received in a payload compartment 14 also visible on Figure 1. The cartridge comprises a precursor storage portion able to store a precursor and at least a heater able to heat the precursor to generate aerosol. The heater of the cartridge is connected electrically to a power source of the device 10 through a pair of contacts arranged in both cartridge and aerosol generation device 10. According to another embodiment of the invention, the heater of the cartridge may be coupled with a heating element arranged in the device 10 and powered by the power source of this device 10. In this case, heat is transmitted directly from the heating element of the device to the heater of the cartridge. According to still another embodiment of the invention, the payload compartment 14 defines a fixed, in respect to the device 10, precursor storage portion. In this case, the precursor storage portion can for example be refilled with a precursor.

The aerosol generation device 10 extends along an axis X called hereinafter longitudinal axis X. The device comprises two extremities along the longitudinal axis X, Referring to Figure 1, the aerosol generation device 10 comprises an outside casing 16. The outside casing 16 extends along the longitudinal axis X and delimits an inside part of the device 10 able to receive internal components, notably a power supply device 18, and comprising a receiving cavity 20 for receiving the removable cartridge. The internal components comprise also notably a printed circuit board 34.

The power supply device 18 comprises a battery 32, for example a rechargeable lithium-ion battery known in the art. The printed circuit board 34 comprises a plurality of electronic components configured to control the operation of the aerosol generation device 10. Particularly, the printed circuit board 34 comprises a controller (not showed) configured to control for example a voltage provided by the battery 32 to the heater of the cartridge.

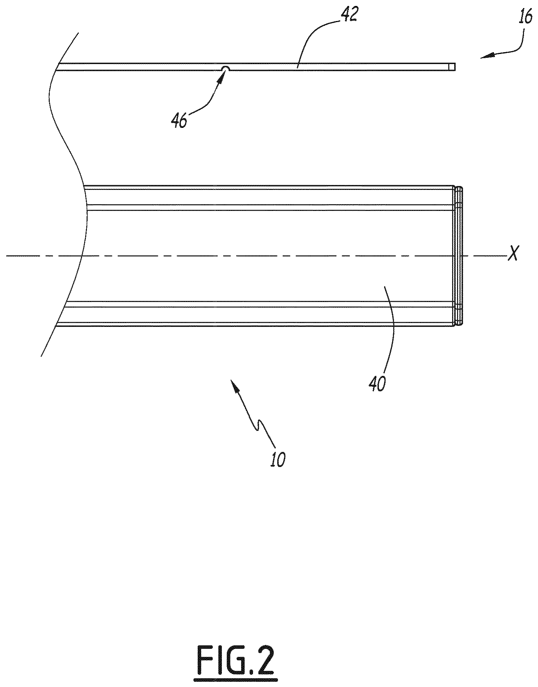

Referring to Figures 1 and 2, the outer casing 16 comprises a frame 40 and two outer walls 42 attached to the frame 40. Each outer wall 42 comprises an outer surface able to be hold by a user of the device 10 and an inner surface facing the inside part of the device 10. Each outer wall 42 extends along the longitudinal axis X. In particular, the outside casing 16 presents generally a parallelepiped extending along the longitudinal axis X, the two outer walls 42 forming at least partially a pair of parallel sides of the parallelepiped. The frame 40 defines two openings in which an associated outer wall 42 is arranged. As visible on Figure 1, each opening is delimited by an edge 44, each edge 44 comprising a protruding part retaining the corresponding outer wall 42 in the corresponding opening. Each outer wall 42 is attached to the outer casing 16 using fixing means amongst: bonding, molding, and mechanical fixation such as screwing. In particular, in the example of Figure 1, the fixing means are a bonding agent which may be arranged on the whole perimeter of the edge 44 to fix the corresponding outer wall 42 in the corresponding opening. The frame 40 can be notably made of materials amongst: aluminum, stainless steel, titanium and each outer wall 42 can be made of glass. Each outer wall 42 presents for example a thickness comprised between 0,5 mm and 4 mm, advantageously between 1 mm and 3 mm.

According to the invention, each outer wall 42 or at least one outer wall 42 is configured to rupture when the pressure inside the device 10 is greater than a predetermined threshold pressure. In particular, each outer wall 42 or at least one outer wall 42 is configured to rupture away from the extremities of the device 10. The threshold pressure is predetermined during the conception of the device, for example as a function of various parameters as: the geometry of the device, the thickness and the rigidity of the outer wall 42, the characteristic of the battery 32, the expected lifespan of the device 10, safety standards, etc. The threshold pressure value is for example determined to obtain a compromise between a low threshold pressure enabling an easy rupture in case of a low overpressure so as to guarantee the integrity of the device 10 and a higher threshold pressure enabling a greater outer wall 42 lifespan. Indeed, a very low threshold pressure value may lead to a rupture of the outer wall 42 even if the integrity of the device 10 is not threatened and would require frequent and useless replacements of the outer wall 42.

In the example of Figure 2, the outer wall 42 comprises a weak area configured to rupture when the pressure inside the device 10 is greater than the predetermined threshold pressure. The weak area is here a slit 46 arranged on the side of the outer wall 42 facing the inside part of the device 10. The slit 46 extends here perpendicular to the longitudinal axis X for example on the whole width of the outer wall 42. As a variant, the slit 46 may extend along the longitudinal axis X. As a variant also, the slit 46 may extend on a limited range of the width or length of the outer wall 42.

The split 46 can form a depth between 10 % and 60 %, advantageously between 20 % and 40 %, of the thickness of the outer wall 42. The depth of the split 46 is directly related to the predetermined threshold pressure. Indeed, in case of an overpressure inside the device 10, the slit 46 defines a rupture starting point in the outer wall 42 to control the rupture of the outer wall 42. To this extent, the integrity of the device 10 and the user's safety is ensured.

### SECOND EMBODIMENT OF THE INVENTION

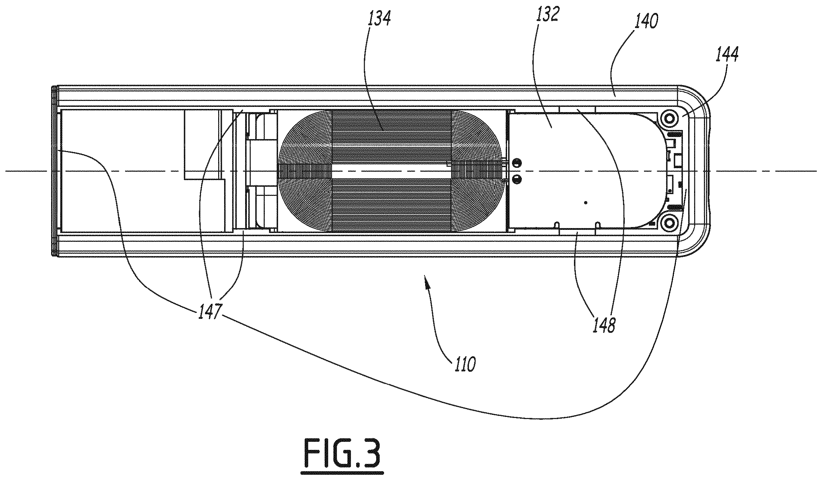

An aerosol generation device 110 according to the second embodiment of the invention will now be explained in reference to Figure 3. The aerosol generation device 110 is similar to the aerosol generation device 10 explained above except the features described below.

As in the previous case, the aerosol generation device 110 comprises an outside casing comprising at least one outer wall 142 similar to the outer wall 42 explained above and a frame 140 similar to the frame 40 explained above. The or each outer wall 142 is received in an opening forming by the frame, the opening being delimited by an edge 144.

The outer wall 142 is attached to the frame 140 via first fixing means. In particular, the edge 144 defines an attaching area 147 facing a part of the internal surface of the corresponding outer wall 142. The attaching part 147 is arrange on a protruding part of the edge 144 retaining the corresponding outer wall 42 in the corresponding opening. The attaching area 147 is configured to receive the first fixing means, notably a bonding agent to fix the corresponding outer wall 142 in the corresponding opening.

As shown on Figure 3, the weak area is here a contact area 148 different from the attaching area 147 and arranged in contact with the frame 140 without fixing means. The attaching area 147 extends on the whole perimeter of the edge 144 excepted on the contact area 148. In the example shown on Figure 3, the contact area 148 is constituted by two regions arranged in a parallel way on each side of the device with respect to the longitudinal axis X.

In a variant of the second embodiment, the contact area 148 is arranged in contact with the frame 140 with second fixing means weaker than the first fixing means. For example, a weaker bonding is used or bonding is used only partially on the surface of the contact area 148.

The contact area 148 is notably arranged near one of the two extremities of the outer wall 142 along the longitudinal axis X. The contact area 148 extends on a length comprised between 2 mm and 20 mm, advantageously between 5 mm and 10 mm along the longitudinal axis X. The length of the contact area 148 enables to adjust the predetermined threshold pressure. Indeed, in case of an overpressure inside the device 110, the contact area 148 defines a rupture starting point in the outer wall 142 to control the rupture of the outer wall 142. In particular, the contact area 148 is arranged away from the extremities of the device 10. To this extent, the integrity of the device 110 and the user's safety is ensured.

### THIRD EMBODIMENT OF THE INVENTION

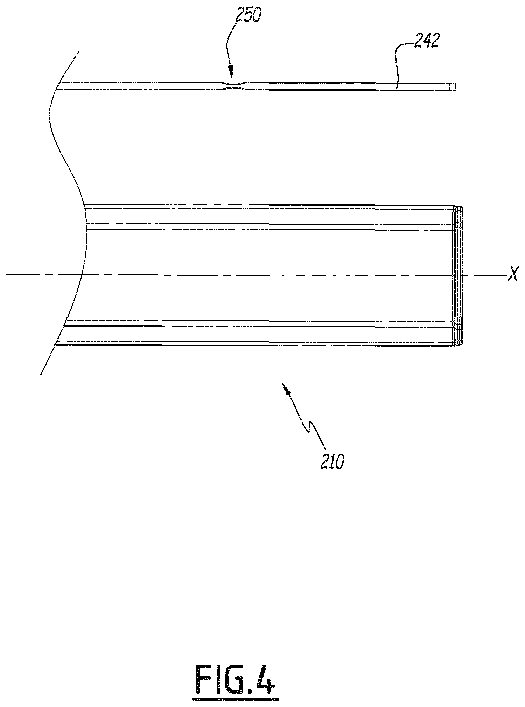

An aerosol generation device 210 according to the third embodiment of the invention will now be explained in reference to Figure 4. The aerosol generation device 210 is similar to the aerosol generation device 10 explained above except the features described below.

As in the first embodiment, the aerosol generation device 210 according to the third embodiment comprises an outside casing comprising at least one outer wall 242 similar to the outer wall 42 explained above and a frame 240 similar to the frame 40 explained above.

The outer wall 242 is made of plastic material, preferably polycarbonate material. The weak area is here a thinner portion 250 of the outer wall 242 with a reduced thickness compared to the rest of the outer wall 242. The thinner portion 250 is here formed by two facing grooves arranged on the two opposite sides of the outer wall 242. Notably the thickness of the thinner portion 50 is comprised between 40 % and 80 % of the maximal thickness of the outer wall 242, advantageously between 50 % and 70 %. The thickness of the thinner portion 250 enables to adjust the predetermined threshold pressure. Indeed, in case of an overpressure inside the device 210, the thinner portion 250 defines a rupture starting point in the outer wall 242 to control the rupture of the outer wall 242. In particular, the thinner portion 250 is arranged away from the extremities of the device 10. To this extent, the integrity of the device 210 and the user's safety is ensured.

### FOURTH EMBODIMENT OF THE INVENTION

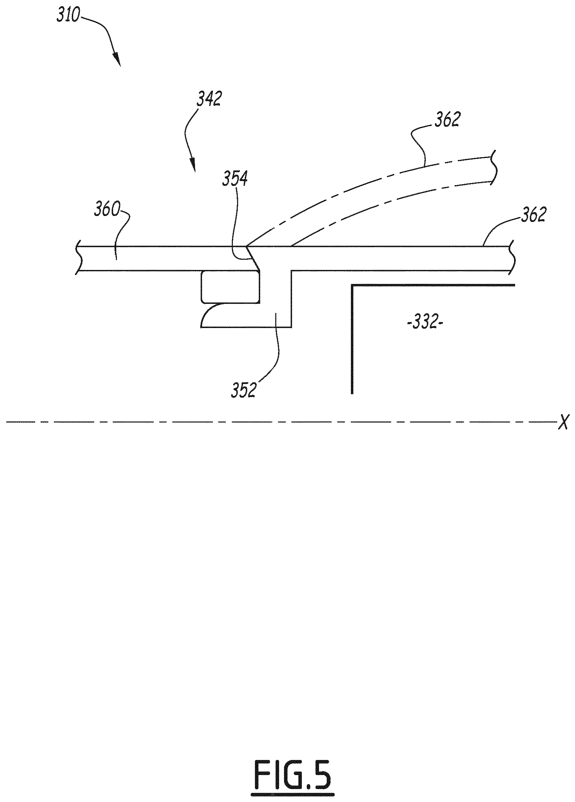

An aerosol generation device 310 according to the fourth embodiment of the invention will now be explained in reference to Figure 5. The aerosol generation device 310 is similar to the aerosol generation device 10 explained above except the features described below.

As in the first embodiment, the aerosol generation device 310 according to the fourth embodiment comprises an outside casing comprising at least one outer wall 342 similar to the outer wall 42 explained above and a frame 340 similar to the frame 40 explained above. The aerosol generation device 310 according to the fourth embodiment also comprises a battery 332 similar to battery 32 explained above.

In this embodiment, the outer wall 342 does not comprise a weak area. The outer wall 342 comprises a first portion 360 and a second portion 362. In particular, the first portion defines an opening and the second portion 362 is here inserted into the said opening. The first portion 360 is made of glass. The first portion 360 is attached to the frame 340 as described above. In particular, the fixing means are arranged on the whole perimeter of the edge 344 of the frame 340 to fix the first portion 360 in the corresponding opening delimited in the frame 340. The second portion 362 is made of plastic material, preferably polycarbonate material. The second portion 362 is attached to the first portion 360 via fixing means allowing the second portion 362 to bend and/or to be detached from the first portion 360 when the pressure inside the device 310 is greater than the predetermined threshold pressure.

As visible in Figure 5, the said fixing means are notably a clip 352 arranged on the edge of the second portion 362 and able to be clipsed on a chamfer 354 arranged in the first portion 360. In a non-showed variant, the fixing means are a ridge arranged on the edge of the second portion 362 and able to be clipsed inside a groove defined in the first portion 360.

The clip 352 or the ridge are semi rigid so that in case of overpressure inside the device 310, the second portion 362 bends, as represented in dotted line on Figure 5, and enable to release the overpressure notably by enabling the releasing of the gases produced by the battery 332. In particular, the second portion 362 is arranged away from the extremities of the device 10. The bending of the second portion 362 may lead to a detachment of the second portion 362 from the first portion 360. To this extent, the integrity of the device 310 and the user's safety is ensured.

In a variant, the fixing means are configured to detach the second portion 362 from the first portion 360 directly without any bending of the second portion 362 when the pressure inside the device 310 is greater than the predetermined threshold pressure.

### OTHER EMBODIMENTS OF THE INVENTION

It will be apparent to those skilled in the art that other embodiments may be carried out in various ways by combining the previous embodiments.

For example, an aerosol generation device according to another embodiment may comprise a weak point as described above and fixing means allowing the outer wall to bend and/or to be detached from the frame when the pressure inside the device is greater than the predetermined threshold pressure.

For example, an aerosol generation device according to another embodiment may comprise a weak point being a slit arranged in an outer wall made of plastic material. The scope of the present invention is defined by the scope of the appended claims.

## Claims

1. Aerosol generating device (10; 110; 210; 310) extending along a longitudinal axis (X) and comprising an outside casing (16) delimiting an inside part of the device (10; 110; 210; 310), the inside part comprising a power supply device (18) and a receiving cavity (20) for receiving a cartridge;
wherein the outside casing (16) comprises a frame (40), a first outer wall (42) attached to the frame (40) and a second outer wall (42) attached to the frame (40);
wherein the frame (40) defines two openings in each of which an associated outer wall (42) is arranged;
wherein the first and second outer walls (42) extend along the longitudinal axis (X); wherein the device (10; 110; 210) comprises two extremities along the longitudinal axis (X),
wherein at least the first outer wall (42) is configured to rupture and/or at least a portion of the first outer wall (42) is configured to bend and/or to be detached from the frame (40) when the pressure inside the device is greater than a predetermined threshold pressure,
the first outer wall (42) being configured to rupture and/or at least a portion of the outer wall (42) being configured to bend and/or to be detached from the frame (40) away from the extremities.

2. Aerosol generating device (10; 110; 210) according to claim 1, wherein the first outer wall (42) comprises an outer surface able to be hold by a user of the device (10).

3. Aerosol generating device (10; 110; 210) according to any of claims 1 or 2, wherein the first outer wall (42) comprises a weak area configured to rupture when the pressure inside the device is greater than the predetermined threshold pressure.

4. Aerosol generating device (10) according to claim 3, wherein the weak area is a slit (46) arranged on a side of the first outer wall (42) facing the inside part of the device (10).

5. Aerosol generating device (110) according to claim 3, wherein the first outer wall (42) further comprises an attaching area (147) attaching the first outer wall (42) to the frame (40) with first fixing means, the weak area being a contact area (148) different from the attaching area (147) and arranged in contact with the frame (40) without fixing means or with second fixing means weaker than the first fixing means.

6. Aerosol generating device (210) according to claim 3, wherein the weak area is a thinner region (50) with a reduced thickness compared to the rest of the first outer wall (42).

7. Aerosol generating device (310) according any of preceding claims, wherein the first outer wall (42) comprises a first portion and a second portion, the first portion being attached to the frame (40) and the second portion is attached to the first portion via fixing means allowing the second portion to bend and/or to be detached from the first portion when the pressure inside the device (310) is greater than the predetermined threshold pressure.

8. Aerosol generating device (10; 110; 210; 310) according to any of preceding claims, wherein the first outer wall (42) is made of glass.

9. Aerosol generating device (10; 110; 210; 310) according to any of claims 1 to 7, wherein the first outer wall (42) is made of plastic material, preferably polycarbonate material.

10. Aerosol generating device (10; 110; 210; 310) according to any of preceding claims,
wherein the second outer wall (42) is configured to rupture and/or to bend and/or to be detached from the frame (40) when the pressure inside the device (10; 110; 210; 310) is greater than the predetermined threshold pressure.

11. Aerosol generating device (10; 110; 210; 310) according to claim 10, wherein the outside casing (16) presents generally a parallelepiped extending along the longitudinal axis (X), the two outer walls (42) forming at least partially a pair of parallel sides of the parallelepiped.

12. Aerosol generating device (10; 110; 210; 310) according to any of preceding claims, wherein the or each outer wall (42) is attached to the outside casing (16) using fixing means amongst: bonding, molding, mechanical fixation such as screwing.

13. Aerosol generating device (10; 110; 210; 310) according to any of preceding claims, wherein the frame (40) defines at least an opening delimited by an edge (44), the or each edge (44) comprising a protruding part retaining the corresponding outer wall (42) in the corresponding opening.

14. Aerosol generating device (10; 110; 210; 310) according to any of precedent claims, wherein the frame (40) is made of materials amongst: aluminum, stainless steel, titanium.

## Patentansprüche

1. Aerosolerzeugungsvorrichtung (10; 110; 210; 310), die sich entlang einer Längsachse (X) erstreckt und ein Außengehäuse (16) hat, das einen Innenbereich der Vorrichtung (10; 110; 210; 310) abgrenzt, wobei der Innenbereich eine Stromversorgungsvorrichtung (18) und einen Aufnahmeschacht (20) zum Aufnehmen einer Kartusche umfasst;
wobei das Außengehäuse (16) einen Rahmen (40), eine erste Außenwand (42), die am Rahmen (40) befestigt ist, und eine zweite Außenwand (42), die am Rahmen (40) befestigt ist, umfasst;
wobei der Rahmen (40) zwei Öffnungen definiert, in denen jeweils eine zugehörige Außenwand (42) angeordnet ist;
wobei sich die erste und die zweite Außenwand (42) entlang der Längsachse (X) erstrecken; wobei die Vorrichtung (10; 110; 210) zwei Enden entlang der Längsachse (X) aufweist,
wobei
mindestens die erste Außenwand (42) so ausgebildet ist, dass sie bricht, und/oder mindestens ein Teil der ersten Außenwand (42) so ausgebildet ist, dass er sich verbiegt und/oder sich vom Rahmen (40) löst, wenn der Druck im Inneren der Vorrichtung größer als ein vorbestimmter Schwellenwertdruck ist, die erste Außenwand (42) so ausgebildet ist, dass sie bricht, und/oder zumindest ein Teil der Außenwand (42) so ausgebildet ist, dass er sich verbiegt und/oder sich vom Rahmen (40) löst, wobei sich das Lösen von den Enden her vollzieht.

2. Aerosolerzeugungsvorrichtung (10; 110; 210) nach Anspruch 1, wobei die erste Außenwand (42) eine Außenfläche aufweist, die von einem Benutzer der Vorrichtung (10) gehalten werden kann.

3. Aerosolerzeugungsvorrichtung (10; 110; 210) nach einem der Ansprüche 1 oder 2, wobei die erste Außenwand (42) einen Schwächungsbereich aufweist, der so ausgebildet ist, dass er bricht, wenn der Druck im Inneren der Vorrichtung größer als der vorbestimmte Schwellendruck ist.

4. Aerosolerzeugungsvorrichtung (10) nach Anspruch 3, wobei der Schwächungsbereich ein Schlitz (46) ist, der auf einer der Innenseite der Vorrichtung (10) zugewandten Seite der ersten Außenwand (42) angeordnet ist.

5. Aerosolerzeugungsvorrichtung (110) nach Anspruch 3, wobei die erste Außenwand (42) ferner einen Befestigungsbereich (147) aufweist, durch den die erste Außenwand (42) unter Verwendung von ersten Befestigungsmitteln am Rahmen (40) befestigt ist, wobei der Schwächungsbereich ein Kontaktbereich (148) ist, der sich vom Befestigungsbereich (147) unterscheidet und der ohne Befestigungsmittel oder unter Verwendung von zweiten Befestigungsmitteln, die schwächer als die ersten Befestigungsmittel sind, in Kontakt mit dem Rahmen (40) angeordnet ist.

6. Aerosolerzeugungsvorrichtung (210) nach Anspruch 3, wobei der Schwächungsbereich ein dünnerer Bereich (50) mit einer reduzierten Dicke im Vergleich zum Rest der ersten Außenwand (42) ist.

7. Aerosolerzeugungsvorrichtung (310) nach einem der vorhergehenden Ansprüche, wobei die erste Außenwand (42) einen ersten Abschnitt und einen zweiten Abschnitt umfasst, wobei der erste Abschnitt an dem Rahmen (40) befestigt ist und der zweite Abschnitt an dem ersten Abschnitt unter Verwendung von Befestigungsmitteln befestigt ist, die es dem zweiten Abschnitt ermöglichen, sich zu biegen und/oder von dem ersten Abschnitt zu lösen, wenn der Druck innerhalb der Vorrichtung (310) größer als der vorbestimmte Schwellenwertdruck ist.

8. Aerosolerzeugungsvorrichtung (10; 110; 210; 310) nach einem der vorhergehenden Ansprüche, wobei die erste Außenwand (42) aus Glas besteht.

9. Aerosolerzeugungsvorrichtung (10; 110; 210; 310) nach einem der Ansprüche 1 bis 7, wobei die erste Außenwand (42) aus Kunststoff, vorzugsweise aus Polycarbonat, besteht.

10. Aerosolerzeugungsvorrichtung (10; 110; 210; 310) nach einem der vorherigen Ansprüche,
wobei die zweite Außenwand (42) so ausgebildet ist, dass sie bricht und/oder sich verbiegt und/oder sich vom Rahmen (40) löst, wenn der Druck im Inneren der Vorrichtung (10; 110; 210; 310) größer ist als der vorgegebene Schwellenwert.

11. Aerosolerzeugungsvorrichtung (10; 110; 210; 310) nach Anspruch 10, wobei das Außengehäuse (16) im Allgemeinen ein Parallelepiped (Spat) darstellt, das sich entlang der Längsachse (X) erstreckt, wobei die beiden Außenwände (42) zumindest teilweise ein Paar paralleler Seiten des Parallelepipeds bilden.

12. Aerosolerzeugungsvorrichtung (10; 110; 210; 310) nach einem der vorhergehenden Ansprüche, wobei die oder jede Außenwand (42) am Außengehäuse (16) unter Verwendung von Befestigungsmitteln wie Kleben, Formen oder mechanischer Befestigung wie Schrauben befestigt ist.

13. Aerosolerzeugungsvorrichtung (10; 110; 210; 310) nach einem der vorhergehenden Ansprüche, wobei der Rahmen (40) mindestens eine Öffnung definiert, die durch eine Kante (44) begrenzt ist, wobei die oder jede Kante (44) einen vorspringenden Abschnitt umfasst, der die entsprechende Außenwand (42) in der entsprechenden Öffnung hält.

14. Aerosolerzeugungsvorrichtung (10; 110; 210; 310) nach einem der vorhergehenden Ansprüche, wobei der Rahmen (40) aus einem der folgenden Materialien besteht: Aluminium, Edelstahl, Titan.

## Revendications

1. Dispositif de génération d'aérosol (10 ; 110 ; 210 ; 310) s'étendant le long d'un axe longitudinal (X) et comprenant une enveloppe extérieure (16) délimitant une partie intérieure du dispositif (10 ; 110 ; 210 ; 310), la partie intérieure comprenant un dispositif d'alimentation électrique (18) et une cavité de réception (20) pour recevoir une cartouche ;
l'enveloppe extérieure (16) comprend un cadre (40), une première paroi extérieure (42) fixée au cadre (40) et une seconde paroi extérieure (42) fixée au cadre (40) ;
dans lequel le cadre (40) définit deux ouvertures dans chacune desquelles une paroi extérieure associée (42) est disposée ;
dans lequel les première et seconde parois extérieures (42) s'étendent le long de l'axe longitudinal (X) ; dans lequel le dispositif (10 ; 110 ; 210) comprend deux extrémités le long de l'axe longitudinal (X),
dans lequel
au moins la première paroi extérieure (42) est configurée pour se rompre et/ou au moins une partie de la première paroi extérieure (42) est configurée pour se plier et/ou se détacher du cadre (40) lorsque la pression à l'intérieur du dispositif est supérieure à une pression seuil prédéterminée,
la première paroi extérieure (42) est configurée pour se rompre et/ou au moins une partie de la paroi extérieure (42) est configurée pour se plier et/ou se détacher du cadre (40) en s'éloignant des extrémités.

2. Dispositif de génération d'aérosol (10 ; 110 ; 210) selon la revendication 1, dans lequel la première paroi extérieure (42) comprend une surface extérieure pouvant être tenue par un utilisateur du dispositif (10).

3. Dispositif de génération d'aérosol (10 ; 110 ; 210) selon l'une quelconque des revendications 1 ou 2, dans lequel la première paroi extérieure (42) comprend une zone faible configurée pour se rompre lorsque la pression à l'intérieur du dispositif est supérieure à la pression seuil prédéterminée.

4. Dispositif de génération d'aérosol (10) selon la revendication 3, dans lequel la zone faible est une fente (46) disposée sur un côté de la première paroi extérieure (42) faisant face à la partie intérieure du dispositif (10).

5. Dispositif de génération d'aérosol (110) selon la revendication 3, dans lequel la première paroi extérieure (42) comprend en outre une zone de fixation (147) fixant la première paroi extérieure (42) au cadre (40) avec des premiers moyens de fixation, la zone faible étant une zone de contact (148) différente de la zone de fixation (147) et disposée en contact avec le cadre (40) sans moyens de fixation ou avec des seconds moyens de fixation plus faibles que les premiers moyens de fixation.

6. Dispositif de génération d'aérosol (210) selon la revendication 3, dans lequel la zone faible est une région plus mince (50) avec une épaisseur réduite par rapport au reste de la première paroi extérieure (42).

7. Dispositif de génération d'aérosol (310) selon l'une quelconque des revendications précédentes, dans lequel la première paroi extérieure (42) comprend une première portion et une seconde portion, la première portion étant fixée au cadre (40) et la seconde portion étant fixée à la première portion par des moyens de fixation permettant à la seconde portion de se plier et/ou de se détacher de la première portion lorsque la pression à l'intérieur du dispositif (310) est supérieure à la pression seuil prédéterminée.

8. Dispositif de génération d'aérosol (10 ; 110 ; 210 ; 310) selon l'une quelconque des revendications précédentes, dans lequel la première paroi extérieure (42) est en verre.

9. Dispositif de génération d'aérosol (10 ; 110 ; 210 ; 310) selon l'une quelconque des revendications 1 à 7, dans lequel la première paroi extérieure (42) est en matière plastique, de préférence en polycarbonate.

10. Dispositif de génération d'aérosol (10 ; 110 ; 210 ; 310) selon l'une quelconque des revendications précédentes,
dans lequel la seconde paroi extérieure (42) est configurée pour se rompre et/ou se plier et/ou se détacher du cadre (40) lorsque la pression à l'intérieur du dispositif (10 ; 110 ; 210 ; 310) est supérieure à la pression seuil prédéterminée.

11. Dispositif de génération d'aérosol (10 ; 110 ; 210 ; 310) selon la revendication 10, dans lequel l'enveloppe extérieure (16) présente généralement un parallélépipède s'étendant le long de l'axe longitudinal (X), les deux parois extérieures (42) formant au moins partiellement une paire de côtés parallèles du parallélépipède.

12. Dispositif de génération d'aérosol (10 ; 110 ; 210 ; 310) selon l'une quelconque des revendications précédentes, dans lequel la ou chaque paroi extérieure (42) est fixée à l'enveloppe extérieure (16) à l'aide de moyens de fixation parmi : le collage, le moulage, la fixation mécanique telle que le vissage.

13. Dispositif de génération d'aérosol (10 ; 110 ; 210 ; 310) selon l'une quelconque des revendications précédentes, dans lequel le cadre (40) définit au moins une ouverture délimitée par un bord (44), le ou chaque bord (44) comprenant une partie saillante retenant la paroi extérieure correspondante (42) dans l'ouverture correspondante.

14. Dispositif de génération d'aérosol (10 ; 110 ; 210 ; 310) selon l'une quelconque des revendications précédentes, dans lequel le cadre (40) est constitué de matériaux parmi : l'aluminium, l'acier inoxydable, le titane.
